# EUROPÄISCHE PATENTSCHRIFT

(11) **EP 0 698 640 B1**
(45) Veröffentlichungstag und Bekanntmachung des Hinweises auf die Patenterteilung: **26.05.1999**
(21) Anmeldenummer: 95112919.6
(22) Anmeldetag: 17.08.1995
(51) Int. Cl.: C08L 67/06, C08G 63/676

(54) **Härtbare Polyester-Formmassen**
Curable polyester moulding compositions
Masses à mouler durcissables à base de polyester

(30) Priorität: 27.08.1994 DE 4430481
(43) Veröffentlichungstag der Anmeldung: 28.02.1996
(73) Patentinhaber: DSM RESINS B.V., 8022 AW Zwolle (NL)
(72) Erfinder: Lorenz, Reinhard, Dr., D-67117 Limburgerhof (DE); Georg, Gerhard, D-67069 Ludwigshafen (DE)
(74) Vertreter: den Hartog, Jeroen Hendrikus Joseph

(56) Entgegenhaltungen:
- CA-A- 2 100 369
- DE-A- 1 803 345
- DE-A- 3 701 299
- DE-A- 4 300 019
- US-A- 4 294 941
- US-A- 4 320 045
- Handbook of Composites, George Lubin (Ed.), Van Nostrand Reinhold Company Inc. (Publ.), NY 1982; ISBN:0-442-24897-0; pages 17-20.
- Sheet Molding Compounds: Science and Technology, Hamid G. Kia (Ed.), Carl Hanser Verlag, 1993; ISBN 3-446-16213-5; pages 16-21

## Beschreibung

Die Erfindung betrifft härtbare Polyesterharz-Formmassen auf Basis von Diethylenglykol als Diolkomponente mit guter Styrolverträglichkeit.

SMC-Formmassen aus ungesättigten Polyesterharzen mit Zusätzen von Verstärkungsfasern und Füllstoffen ergeben nach der Härtung Form-Teile mit hoher Festigkeit, Wärmeformbeständigkeit und Lösungsmittelbeständigkeit. Sie haben daher zur Herstellung von Konstruktionswerkstoffen eine große Bedeutung erlangt. Ein Problem stellt aber die Neigung der Formmassen dar, beim Härtungsvorgang zu schwinden, was zu inneren Spannungen, zur Bildung von Einfallstellen, Verzugserscheinung und Oberflächenwelligkeit führt. Durch Zusatz bestimmter thermoplastischer Polymerer kann dieser Polymerisationsschwund reduziert werden.

Derartige Niederschrumpfungssysteme neigen jedoch häufig bei Lagerung, insbesondere während und nach der Eindickung, zu Phasenseparationen im Halbzeug, was schließlich Lunker und Poren im Formteil verursacht. Dies macht aufwendige Nacharbeiten zur Fehlerbeseitigung notwendig. Selbst wenn keine Fehlstellen dieser Art erkennbar sind, stören aber dennoch häufig Fleckenbildung und lokale Pigmentanreicherungen in der Formteiloberfläche als Folge von unerwünschten Phasenseparationen in den Formmassen.

Handelsübliche SMC-Harze sind meist auf Basis von Maleinsäure und Propylenglykol aufgebaut, wobei ein Teil der Maleinsäurekomponente durch Phthalsäure ersetzt ist, wenn man die Neigung zur Phasenseparation vermindern will. Propylenglykol ist aber verhältnismäßig teuer. Beim Versuche, es durch das billigere Diethylenglykol zu ersetzen, stellt man fest, daß entsprechende SMC-Harze bei der Eindickung sehr stark zur Phasenseparation neigen. Dies macht sich besonders dann störend bemerkbar, wenn man als Niederschrumpfkomponente Polystyrol einsetzen oder die Formmassen pigmentieren will.

Ein Maß für die Neigung zur Phasenseparation ist die Styrolverträglichkeit des Harzes. Diese wird dadurch gemessen, daß man 5 g des Harzes in einem Gefäß vorlegt und mit Styrol titriert. Nach Zugabe einer bestimmten Styrolmenge erhält man infolge Phasenseparation eine Trübung. Als Styrolverträglichkeit bezeichnet man das Verhältnis (Gewicht des zugesetzten Styrols am Trübungspunkt) zu (Gewicht des vorgelegten Harzes).

Bei der Eindickung von SMC-Harzen mit Magnesiumoxid oder -hydroxid findet eine Ionomerbildung statt, durch welche die Styrolverträglichkeit drastisch herabgesetzt wird. Um beim Eindickprozeß eine Phasenseparation zu verhindern, muß die Styrolverträglichkeit des Ausgangsharzes deshalb verhältnismäßig hoch sein, vorzugsweise größer als 5:1 und insbesondere von 10:1 bis 20:1.

Ziel der Erfindung war also, ein SMC-Harz auf Basis des billigen Diethylenglykols mit ausreichend hoher Styrolverträglichkeit bereitzustellen.

Es wurde gefunden, daß diese Aufgabe gelöst wird, wenn man in die Diolkomponente 20 bis 45 Mol-% Neopentylglykol und/oder Dipropylenglykol einbaut.

Gegenstand der Erfindung sind demzufolge härtbare Polyesterharz-Formmassen, enthaltend
A) 100 Gew.-Teile einer Mischung aus
   20 bis 70 Gew.-% eines ungesättigten Polyesters und aus
   80 bis 30 Gew.-% Styrol,
B) 3 bis 50 Gew.-Teile eines gegebenenfalls carboxylhaltigen Polyvinylacetats oder Polymethylmethacrylats und/oder eines oligomeren gesättigten Polyesters oder Polyesterurethans und/oder Polystyrol,
C) 0,5 bis 10 Gew.-% eines Eindickmittels,
D) 0 bis 500 Gew.-Teile Verstärkungsfasern und/oder Füllstoffe,
E) 0,1 bis 4 Gew.-Teile Radikalinitiatoren,
F) gegebenenfalls weitere übliche Zusatzstoffe,
wobei der ungesättigte Polyester aus folgenden Molekülbausteinen aufgebaut ist:

| | | |
|---|---|---|
| a) | 90 bis 75 Mol-% | Maleinsäure bzw. Fumarsäure, |
| | 0 bis 25 Mol-% | o-Phthalsäure, |
| | 0 bis 10 Mol-% | Adipinsäure, Terephthalsäure oder Isophthalsäure einerseits und |
| | | |
| b) | 80 bis 60 Mol-% | Diethylenglykol, |
| | wenigstens 20 Mol-% | Neopentylglykol und/oder Dipropylenglykol, |
| | 0 bis 10 Mol-% | Ethylenglykol oder Butandiol-1,4, |

wobei sich die Prozentangaben jeweils zu 100 % addieren.

Zu den einzelnen Komponenten der Formmassen ist folgendes zu sagen:
A: Die ungesättigten Polyester werden durch Polykondensation von Maleinsäureanhydrid und gegebenenfalls Phthalsäureanhydrid mit einer Mischung von Diethylenglykol und Neopentylglykol bzw. Dipropylenglykol hergestellt. Dabei isomerieren die Doppelbindungen der Maleinsäure weitgehend von der cis- in die trans-Struktur, so daß der ungesättigte Polyester überwiegend Fumarsäureeinheiten enthält. Die Säurekomponente sollte vorzugsweise 10 bis 20 Mol-% Phthalsäureanhydrid und die Alkoholkomponente 25 bis 45 Mol-% Neopentylglykol enthalten, damit eine optimale Styrolverträglichkeit des Harzes erhalten wird. Bei der Polykondensation wird im allgemeinen die Säurekomponente im Überschuß eingesetzt, so daß der Polyester überwiegend COOH-Endgruppen enthält. Folglich enthält auch der Polyester um etwa 1 bis 10 Mol-% mehr Dicarbonsäureeinheiten als Dioleinheiten. Die ungesättigten Polyester weisen vorzugsweise eine Säurezahl zwischen 10 und 40 auf (gemessen durch Titration des in Toluol/Ethanol gelösten ungesättigten Polyesters mit 0,1 n methanolischer KOH) und ein mittleres Molekulargewicht (Zahlenmittel) zwischen 500 und 5000 g/Mol (gemessen durch Bestimmung der Säurezahl und OH-Zahl). Die OH-Zahl sollte zwischen 5 und 25 liegen.
   Bevorzugt wird Styrol als alleiniges Comonomer eingesetzt. Es kann aber zu bis zu 40 Gew.-% durch andere übliche Comonomere, z.B. Vinyltoluol, α-Methylstyrol, Allylverbindungen oder (Meth-)Acrylate ersetzt sein.
B. Als Thermoplastkomponenten kommen hochmolekulare Polyvinylacetate oder Polymethylmethacrylate in Frage sowie oligomere gesättigte Polyester oder Polyesterurethane. Bevorzugte Thermoplastkomponente B ist Polystyrol, vorzugsweise mit einem mittleren Molekulargewicht zwischen 20.000 und 200.000.
C. Die Formmasse enthält 0,5 bis 10 Gew.-%, bezogen auf A, eines üblichen Eindickmittels auf Basis einer basischen Metallverbindung. Bevorzugt sind dabei Oxide, Hydroxide, Alkoholate und Salze organischer Säuren von Metallen der 1. bis 3.
   Hauptgruppe, insbesondere MgO, Mg(OH)₂, CaO, Ca(OH)₂, BaO, Li₂O, LiOH, Mg- und Al-Alkoholate, Al-Ethylhexanoat und Al-enzoat. Geeignet sind auch einige Übergangsmetallverbindungen, wie z.B. ZnO.
D. Füllstoffe, wie Kreide, Quarz, Kaolin oder Aluminiumoxidhydrat können in Mengen von 0 bis 200 Gew.-%, bezogen auf A, anwesend sein, Verstärkungsfasern in Mengen von 0 bis 300 Gew.-%, vorzugsweise von 20 bis 200 Gew.-%, bezogen auf A.
E. Für die Härtung werden vorzugsweise solche Peroxide eingesetzt, die bei 120 bis 180°C wirksam sind, z.B. tert.-Butylperoxid, tert.-Butylperbenzoat und 1,1-Di(tert.-butylperoxy)-3,3,5-trimethylcyclohexan.
F. Die erfindungsgemäße Formmasse kann ferner die üblichen Zusatzstoffe enthalten, wie z.B. innere Trennmittel, Inhibitoren und Beschleuniger.

Zur Herstellung von pigmentierten Formteilen werden den Formmassen Pigmentpasten zugesetzt, vorzugsweise solche auf Basis von ungesättigten Polyestern. Die Pigmentpasten können Styrol oder ein anderes reaktives Monomer enthalten; es sind aber auch monomerfreie Pigmentpasten geeignet.

Ein bevorzugtes Verfahren zur Herstellung der erfindungsgemäßen Formmassen besteht darin, daß man die Komponenten A, B, D, E und F (mit Ausnahme von langen Verstärkungsfasern) vermischt, bei Temperaturen unterhalb von 50°C die Komponente C zusetzt und dadurch die Eindickung einleitet, gegebenenfalls die noch fließfähige Masse auf Verstärkungsfasern aufbringt und dann die Eindickung zu Ende führt. Zur Beschleunigung der Eindickung kann es in manchen Fällen zweckmäßig sein, die Masse kurzzeitig auf Temperaturen unterhalb von 100°C, vorzugsweise unterhalb von 50°C zu erwärmen. Die vollständige Eindickung der Masse ist vorzugsweise in wenigen Tagen praktisch beendet.

Die eingedickten Massen können ohne Phasentrennung längere Zeit bis zur Verarbeitung gelagert werden, wobei sie z.B. aufgewickelt gestapelt oder auch verpackt werden können. Zur Verarbeitung der Formmassen kommen das Pressen, Spritzpressen, Spritzgießen und Tiefziehen in Frage, wobei die Härtung bei Temperaturen oberhalb von 50°C, vorzugsweise zwischen 80 und 200°C und insbesondere zwischen 120 und 180°C durchgeführt wird.

## Patentansprüche

1. Härtbare Polyesterharz-Formmassen, enthaltend
A) 100 Gew.-Teile einer Mischung aus
20 bis 70 Gew.-% eines ungesättigten Polyesters und aus
80 bis 30 Gew.-% Styrol,
B) 3 bis 50 Gew.-Teile eines gegebenenfalls carboxylhaltigen Polyvinylacetats oder Polymethylmethacrylats und/oder eines oligomeren gesättigten Polyesters oder Polyesterurethans und/oder Polystyrols,
C) 0,5 bis 10 Gew.-Teile eines Eindickmittels,
D) 0 bis 500 Gew.-Teile Verstärkungsfasern und/oder Füllstoffe,
E) 0,1 bis 4 Gew.-Teile Radikalinitiatoren,
F) gegebenenfalls weitere übliche Zusatzstoffe,
dadurch gekennzeichnet, daß der ungesättigte Polyester aus folgenden Molekülbausteinen aufgebaut ist:
| | | |
|---|---|---|
| a) | 90 bis 75 Mol-% | Maleinsäure bzw. Fumarsäure, |
| | 0 bis 25 Mol-% | o-Phthalsäure, |
| | 0 bis 10 Mol-% | Adipinsäure, Terephthalsäure oder Isophthalsäure einerseits und |
| | | |
| b) | 80 bis 60 Mol-% | Diethylenglykol, |
| | wenigstens 20 Mol-% | Neopentylglykol und/oder Dipropylenglykol, |
| | 0 bis 10 Mol-% | Ethylenglykol oder Butandiol-1,4. |

2. Härtbare Polyesterharz-Formmassen nach Anspruch 1, dadurch gekennzeichnet, daß die Komponente B Polystyrol ist.

## Claims

1. Curable polyester resin moulding compositions containing
A) 100 parts by weight of a mixture prepared from
20 to 70 wt.% of an unsaturated polyester and from
80 to 30 wt.% of styrene,
B) 3 to 50 parts by weight of a polyvinyl acetate or polymethyl methacrylate optionally containing carboxyl groups and/or of an oligomeric saturated polyester or polyesterurethane and/or polystyrene,
C) 0.5 to 10 wt.% of a thickener,
D) 0 to 500 parts by weight of reinforcing fibres and/or fillers,
E) 0.1 to 4 parts by weight of free-radical initiators,
F) optionally further conventional additives,
characterised in that the unsaturated polyester is synthesised from the following molecular units:
| | | |
|---|---|---|
| a) | 90 to 75 mol.% | of maleic acid or fumaric acid, |
| | 0 to 25 mol.% | of o-phthalic acid, |
| | 0 to 10 mol.% | of adipic acid, terephthalic acid or isophthalic acid on the one hand and |
| | | |
| b) | 80 to 60 mol.% | of diethylene glycol, |
| | at least 20 mol.% | of neopentyl glycol and/or dipropylene glycol, |
| | 0 to 10 mol.% | of ethylene glycol or 1,4-butanediol. |

2. Curable polyester resin moulding compositions according to claim 1, characterised in that component B is polystyrene.

## Revendications

1. Masses à mouler en résine polyester durcissable contenant
A) 100 parties en poids d'un mélange de
20 à 70 % en poids d'un polyester insaturé et
80 à 30 % en poids de styrène,
B) de 3 à 50 parties en poids d'un acétate de polyvinyle ou polyméthacrylate de vinyle contenant éventuellement un carboxyle et/ou d'un polyester ou polyester uréthane oligomère insaturé et/ou de polystyrène,
C) de 0,5 à 10 parties en poids d'un agent épaississant,
D) de 0 à 500 parties en poids de fibres de renforcement et/ou de charges,
E) de 0,1 à 4 parties en poids d'initiateurs radicalaires,
F) le cas échéant d'autres additifs habituels,
caractérisées en ce que le polyester insaturé est constitué des composants moléculaires suivants :
a) 90 à 75 % molaire d'acide maléique ou selon les cas d'acide fumarique,
0 à 25 % molaire d'acide o-phtalique
0 à 10 % molaire d'acide adipique, d'acide téréphtalique ou d'acide isophtalique d'une part et
b) 80 à 60 % molaire de diéthylène glycol,
au moins 20 % molaire de néopentyl glycol et/ou de dipropylène glycol,
de 0 à 10 % molaire d'éthylène glycol ou de butane diol-1,4.

2. Masses à mouler en résine polyester durcissable selon la revendication 1, caractérisées en ce que le composant B est le polystyrène.
